**Europäisches Patentamt**

**European Patent Office**

**Office européen des brevets**

(19)

(11) Veröffentlichungsnummer : **0 064 261**
**B1**

(12) # EUROPÄISCHE PATENTSCHRIFT

(45) Veröffentlichungstag der Patentschrift :
26.09.84

(21) Anmeldenummer : **82103580.5**

(22) Anmeldetag : **27.04.82**

(51) Int. Cl.³ : **H 04 L 11/02, H 04 L 17/00**

(54) Verfahren und Anordnung zum Erzeugen von Wählsignalen in Fernschreibmaschinen.

(30) Priorität : **30.04.81 DE 3117306**

(43) Veröffentlichungstag der Anmeldung :
**10.11.82 Patentblatt 82/45**

(45) Bekanntmachung des Hinweises auf die Patenterteilung : **26.09.84 Patentblatt 84/39**

(84) Benannte Vertragsstaaten :
**CH FR GB IT LI SE**

(56) Entgegenhaltungen :
**AT-B-  338 880**
**DE-A- 2 742 996**
**DE-C- 2 354 057**
**SIEMENS ZEITSCHRIFT, 50. Jahrgang, April 1976, Heft 4, Berlin und München DE H. HEINRICH "Der Fernschreiber 1000" Seiten 185-189**

(73) Patentinhaber : **Siemens Aktiengesellschaft Berlin und München Wittelsbacherplatz 2 D-8000 München 2 (DE)**

(72) Erfinder : **Günther, Gerd-Joachim, Ing.grad. Gailenreuther Strasse 19 D-8000 München 60 (DE)**

## Beschreibung

Die Erfindung bezieht sich auf ein Verfahren und eine Anordnung zum Erzeugen von Wählsignalen in Fernschreibmaschinen, bei dem nach dem Betätigen einer Anruftaste an der Fernschreibmaschine eine Vermittlungsstelle zum Eingeben von Wählzeichen auffordert, die dem fernen Teilnehmer zugeordnet sind und bei dem während des Wählens in Abhängigkeit von den Wählzeichen Wählsignale erzeugt werden.

Zum Herstellen einer Verbindung zwischen zwei Fernschreibmaschinen mittels einer Vermittlungsstelle ist es allgemein bekannt, daß zunächst an der rufenden Fernschreibmaschine eine Anruftaste betätigt wird. Als Folge einer kurzen Unterbrechung der Fernschreibleitung durch die Vermittlungsstelle leuchtet an der rufenden Fernschreibmaschine eine Anruflampe auf, die den Teilnehmer zum Eingeben von dem fernen Teilnehmer zugeordneten Wählzeichen auffordert. Bei einer Nummernschalterwahl werden die Wählzeichen in einzelne Wählimpulse umgesetzt. Bei der Verwendung der Codewahl werden die Wählzeichen als Codewörter zur Vermittlungsstelle übertragen.

Aus der DE-PS 23 54 057 ist es bekannt, bei einer Fernschreibmaschine die Wählsignale, d. h. die Wählimpulse oder die codierten Wählzeichen, unter Verwendung der alphanumerischen Tastatur einer Fernschreibmaschine einzugeben. Ein Wählsignalgeber setzt die beispielsweise mittels der Zifferntasten der Tastatur eingegebenen Wählzeichen in die Wählsignale um und gibt sie über eine Fernschalteinheit und eine Fernleitung an die Vermittlungsstelle ab.

Falls die Verbindung zu dem fernen Teilnehmer nicht zustandekommt, weil beispielsweise die Vermittlungsstelle nach wenigen eingegebenen Wählzeichen die Wahlaufforderung zurücknimmt oder weil der gerufene Teilnehmer besetzt ist, müssen die Wählzeichen erneut eingegeben werden. Häufig sind für das Wählen sehr viele Wählzeichen, beispielsweise 24, erforderlich, so daß die wiederholte Eingabe der Wählzeichen von den Bedienpersonen als lästig empfunden wird.

Bei Fernmeldeeinrichtungen, insbesondere bei Fernsprechgeräten ist es aus der AT-PS 338 880 bereits bekannt, eine Wählwiederholung durchzuführen. In diesem Fall wird, falls nach dem vollständigen Eingeben der Rufnummer des fernen Teilnehmers eine Verbindung nicht zustandekommt, eine Taste betätigt, mittels der die Rufnummer in einen Speicher übernommen wird. Die Rufnummer kann nach dem Betätigen einer Rufwiederholtaste aus dem Speicher ausgelesen und zur Vermittlungsstelle ausgegeben werden. Bei diesen Fernsprechgeräten wird mit dem Wählen des fernen Teilnehmers erst begonnen, wenn die Rufnummer vollständig eingegeben wurde. Außerdem ist für eine Einspeicherung der Rufnummer für eine spätere Rufwiederholung das Betätigen der entsprechenden Taste erforderlich.

Der Erfindung liegt die Aufgabe zugrunde, ein Verfahren und eine Anordnung anzugeben, mittels der auf einfache Weise die Bedienung einer Fernschreibmaschine während des Wählvorgangs erleichtert wird, falls beim ersten Wählversuch eine Verbindung zu dem gerufenen Teilnehmer nicht zustandekommt.

Erfindungsgemäß wird die Aufgabe bei dem Verfahren der eingangs genannten Art gelöst durch die zeitliche Aufeinanderfolge folgender Verfahrensschritte :

a) Während des Wählvorgangs werden die den eingegebenen Wählzeichen zugeordneten Wählsignale zur Vermittlungsstelle übertragen und gleichzeitig in der Fernschreibmaschine in einem Speicher gespeichert,

b) falls der Wählvorgang durch die Vermittlungsstelle nach dem Eingeben eines oder mehrerer Wählzeichen unterbrochen wird, wird die Betriebsbereitschaft der Fernschreibmaschine aufrechterhalten und der Vermittlungsstelle wird die Nichtbetriebsbereitschaft der Fernschreibmaschine vorgetäuscht,

c) alle weiteren eingegebenen Wählzeichen werden im Speicher gespeichert,

d) nach einem erneuten Betätigen der Anruftaste und nach dem Betätigen der Wiederholtaste werden die gespeicherten Wählzeichen ausgelesen und es werden die den Wählzeichen zugeordneten Wählsignale erzeugt.

Das Verfahren gemäß der vorliegenden Erfindung hat den Vorteil, daß durch das selbsttätige Speichern der Wählzeichen während des Wählvorgangs die Bedienung der Fernschreibmaschine sehr stark vereinfacht wird. Gegenüber bekannten Fernschreibmaschinen müssen bei wiederholten Wählversuchen nicht immer alle Wählzeichen erneut eingegeben werden. Gegenüber der Rufwiederholung bei Fernsprechgeräten hat das Verfahren den Vorteil, daß außer der Anruftaste lediglich die Wiederholtaste betätigt werden muß und für das Einspeichern der Wählzeichen für eine spätere erneute Wahl kein Tastendruck erforderlich ist.

Falls die Bedienperson nach der Unterbrechung des Wählvorgangs durch die Vermittlungsstelle den Wählvorgang nicht fortsetzen möchte, um beispielsweise zuerst einen anderen Teilnehmer zu rufen, ist es vorteilhaft, wenn die Fernschreibmaschine abgeschaltet wird, wenn nach einer Unterbrechung des Wählvorgangs nach jeweils einer vorgegebenen Zeitdauer kein Wählzeichen eingegeben wird.

Um ein versehentliches Abschalten der Fernschreibmaschine in diesem Fall zu verhindern, ist es vorteilhaft, wenn vor Ablauf der vorgegebenen Zeitdauer ein akustisches Signal erzeugt wird.

Eine vorteilhafte Anordnung zur Durchführung des Verfahrens ist dadurch gekennzeichnet, daß eine Wählstufe vorgesehen ist, die einen Speicher enthält, in den nach dem Betätigen der Anruftaste gleichzeitig mit dem Wählvorgang alle eingegebenen Wählzeichen eingespeichert werden und daß die Wählstufe einen Mikrorechner enthält, der bei einer Unterbrechung des Wählvorgangs durch die Vermittlungsstelle ein Signal erzeugt, daß dieser die Nichtbereitschaft der Fernschreibmaschine anzeigt, der zur Aufrechterhaltung der Betriebsbereitschaft der Fernschreibmaschine ein Signal an die Grundelektronik der Fernschreibmaschine abgibt und der alle weiterhin eingegebenen Wählzeichen in den Speicher einspeichert.

Zur Anpassung der Anordnung an bereits vorhandene Fernschreibmaschinen ist es vorteilhaft, wenn die Wählstufe eine Schaltstufe enthält, über die Signale der Vermittlungsstelle und der Grundelektronik der Fernschreibmaschine zugeführt werden und die mit einer Sende-Empfangseinheit versehen ist, über die die Wählzeichen dem Mikrorechner zugeführt werden.

Eine vorteilhafte Speicherung der Wählzeichen wird erreicht, wenn der Speicher als Halbleiterspeicher ausgebildet ist und mit einer Umschaltstufe verbunden ist, die bei einer Unterbrechung der Stromversorgung der Fernschreibmaschine eine Batterie als Betriebsspannungsquelle zuschaltet.

Insbesondere ist es vorteilhaft, wenn der Speicher Bestandteil des Mikrorechners ist.

Als Wiederholtaste kann im Bedienungsteil der Fernschreibmaschine oder an der Tastatur eine Sondertaste vorgesehen werden. Es ist jedoch vorteilhaft, wenn als Wiederholtaste eine Taste der Tastatur vorgesehen ist, die keinem Wählzeichen zugeordnet ist.

Im folgenden wird eine Durchführung des erfindungsgemäßen Verfahrens anhand einer entsprechenden Anordnung beschrieben, die in den Zeichnungen dargestellt ist.

Es zeigen :

Figur 1 ein Blockschaltbild einer Fernschreibmaschine,

Figur 2 ein Blockschaltbild einer Wählstufe,

Figur 3 ein Schaltbild einer in der Wählstufe vorhandenen Schaltstufe.

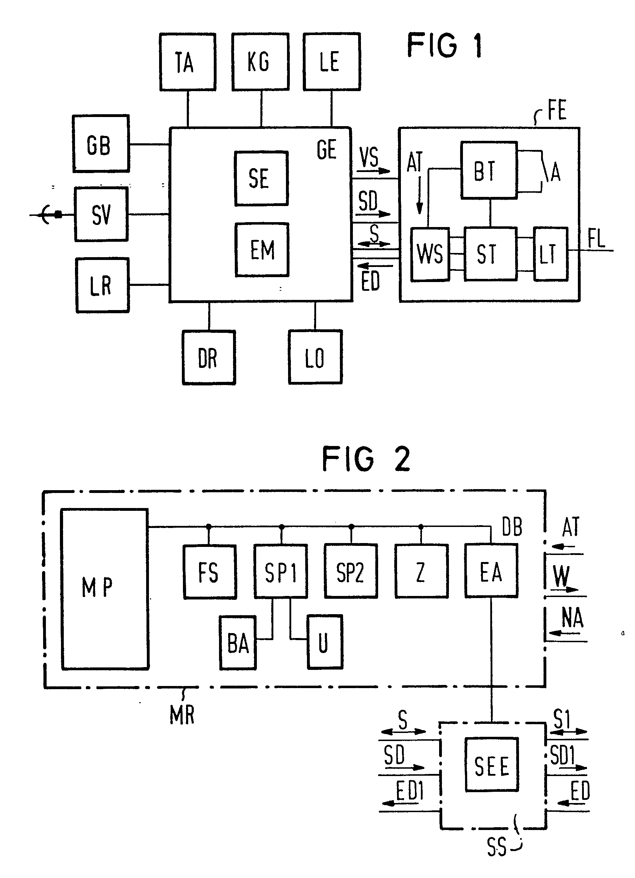

Die in Fig. 1 dargestellte Fernschreibmaschine enthält eine Grundelektronik GE, die die zentrale Steuereinheit für alle logischen Funktionen darstellt. Sie enthält eine Sendeeinheit SE und eine Empfangseinheit EM. An der Sendeeinheit SE sind eine Tastatur TA, ein Kennungsgeber KG und ein Lochstreifenleser LE angeschlossen. An der Empfangseinheit EM sind ein Drucker DR und ein Lochstreifenlocher LO angeschlossen. An der Grundelektronik GE ist weiterhin ein Gerätebedienteil GB angeschlossen. Dieser enthält die Bedienungs- und Anzeigeelemente für die Gerätefunktionen, beispielsweise für das Aufheben einer Sperre der Tastatur TA, für das Auslösen des Kennungsgebers KG oder für das Dauereinschalten des Lochstreifenlochers LO. Weiterhin ist an der Grundelektronik GE eine Stromversorgung SV angeschlossen, die alle erforderlichen Spannungen und Ströme für den Betrieb der Fernschreibmaschine liefert. Außerdem ist an der Grundelektronik GE ein Lautsprecher LR angeschlossen, der beim Erreichen eines Zeilenendes durch das Druckwerk oder beim Verbindungsaufbau akustische Signale erzeugt.

Die Verbindung zu einer Fernleitung FL wird mittels einer Fernschalteinheit FE hergestellt. Diese enthält einen Bedienteil BT, der die Bedienungs- und Anzeigeelemente für die Vermittlungsfunktionen umfaßt. Ein derartiges Bedienungselement ist beispielsweise eine Anruftaste A. Der Bedienteil BT ist mit einer Wählstufe WS verbunden, die die Wählsignale, beispielsweise die Nummernimpulse für das Wählen eines fernen Teilnehmers erzeugt. Weiterhin ist der Bedienteil BT mit einem Steuerteil ST verbunden, der die digitalen Schaltungen für die die Vermittlungsfunktionen, wie beispielsweise für das Aufbauen und Auslösen einer Verbindung, enthält. Dem Steuerteil ST ist ein Leitungsanpassungsteil LT nachgeschaltet, der die analogen Schaltungen für die Übertragung enthält.

Zwischen der Grundelektronik GE und der Fernschalteinheit FE werden die Sendedaten SD, die Empfangsdaten ED, Steuersignale S und Versorgungsspannungen VS übertragen. Ein Teil der Steuersignale S wird durch die Wählstufe WS zum Steuerteil ST durchgeschleift.

Beim Wählen des fernen Teilnehmers wird der Wählstufe WS nach dem Betätigen der Anruftaste A ein Signal AT zugeführt, das die Wählstufe WS für die Erzeugung der Wählsignale vorbereitet. Nach der Aufforderung zum Wählen durch die Vermittlungsstelle werden die Wählzeichen mittels der Tastatur TA eingegeben und als Sendedaten SD der Wählstufe WS zugeführt. Diese erzeugt in Abhängigkeit von den Sendedaten SD die Wählsignale und gibt sie über die Fernleitung FL an die Vermittlungsstelle ab. Gleichzeitig werden die Wählzeichen in der Wählstufe WS in einem Speicher gespeichert.

Falls nach einer vollständigen Eingabe aller Wählzeichen die Verbindung zum fernen Teilnehmer nicht zustandekommt, können nach einem erneuten Betätigen der Anruftaste A und dem Betätigen einer Wiederholtaste in der Tastatur TA unter Verwendung der gespeicherten Wählzeichen erneut Wählsignale erzeugt werden.

Falls der Wählvorgang bereits nach dem Eingeben weniger Wählzeichen durch die Vermittlungsstelle unterbrochen wird, erzeugt die Wählstufe WS ein Signal, das die Nichtbetriebsbereitschaft der Fernschreibmaschine über die Fernleitung FL der Vermittlungsstelle mitteilt. Gleichzeitig erzeugt die Wählstufe WS jedoch auch ein Signal, das die Fernschreibmaschine betriebsbereit hält, so daß die restlichen Wählzeichen eingegeben werden können und für eine spätere Wahl mittels der Wiederholtaste zur Verfügung stehen.

Die in Fig. 2 dargestellte Wählstufe WS wird aus einem im Handel unter der Bezeichnung SKC 85 erhältlichen Mikrorechner MR und einer Schaltstufe SS gebildet. Der Mikrorechner MR enthält einen Mikroprozessor MP, an dem über einen Datenbus DB ein Festwertspeicher FS, Schreib-Lese-Speicher SP1 und SP2, eine Zählstufe Z und eine Ein-/Ausgabeeinheit EA angeschlossen sind.

Der Festwertspeicher FS enthält das Mikroprogramm, während der Speicher SP1 für die Speicherung der Wählzeichen vorgesehen ist. Der Schreib-Lese-Speicher SP2 ist als Arbeitsspeicher vorgesehen und die Zählstufe Z dient zum Erzeugen von vorgegebenen Zeitdauern. Die Ein-/Ausgabeeinheit EA ist ein im Handel unter der Bezeichnung 8255 erhältlicher integrierter Schaltkreis, der die Verbindung des Mikroprozessors MP zu angeschlossenen Einheiten herstellt. Die Ein-/Ausgabeeinheit EA ist mit dem Bedienteil BT und mit dem Steuerteil ST verbunden. Außerdem ist an ihr die Schaltstufe SS angeschlossen.

Ein wesentlicher Bestandteil der Schaltstufe SS ist eine Sende-Empfangseinheit SEE, die im Handel unter der Bezeichnung 8251 erhältlich ist. Außerdem enthält die Schaltstufe SS binäre Verknüpfungsglieder.

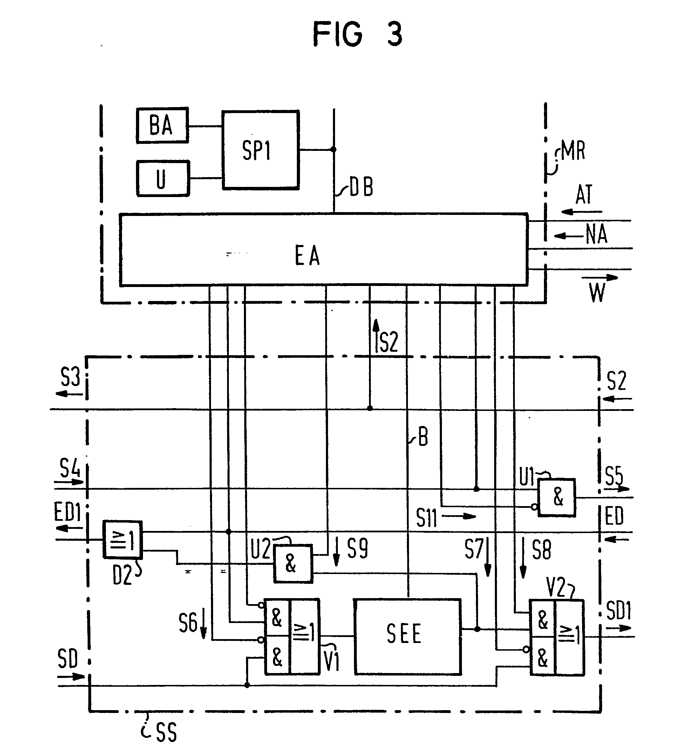

Weitere Einzelheiten der Wählstufe WS werden im Zusammenhang mit dem in Fig. 3 dargestellten Schaltbild der Schaltstufe SS beschrieben.

Die in Fig. 3 dargestellte Schaltstufe SS ist einerseits über einen Datenbus B und andererseits über eine Mehrzahl von Anschlußleitungen an der Ein-/Ausgabeeinheit EA angeschlossen. Außerdem ist sie mit der Grundelektronik GE und dem Steuerteil ST verbunden.

Wenn am Bedienteil BT die Anruftaste A betätigt wird, wird das Signal AT der Ein-/Ausgabeeinheit EA zugeführt.

Im Mikrorechner MR wird damit ein dem Wählvorgang zugeordnetes Mikroprogramm aufgerufen. Wenn die Vermittlungsstelle zum Eingeben der Wählzeichen auffordert, werden vom Steuerteil ST ein Signal S2, das den Leitungsbetrieb in der Fernschreibmaschine einstellt und ein Signal NA abgegeben, das zur Abgabe von Nummernschaltimpulsen auffordert. Das Signal S2 wird über ein ODER-Glied D1 als Signal S3 der Grundelektronik GE zugeführt. Diese gibt ihrerseits ein Signal S4 ab, das über ein UND-Glied U1 als Signal S5 dem Steuerteil ST zugeführt wird und der Vermittlungsstelle die Betriebsbereitschaft der Fernschreibmaschine anzeigt. Wenn die Wählzeichen eingegeben werden, gelangen diese als Sendedaten SD über ein Verknüpfungsglied V1 zur Sende-Empfangseinheit SEE. Dem Verknüpfungsglied V1 wird zu diesem Zweck ein Signal S6 zugeführt. Gleichzeitig wird die Weiterschaltung der Sendedaten SD durch ein Signal S7, das einem Verknüpfungsglied V2 zugeführt wird, gesperrt. Über den Bus B gelangen die Wählzeichen zum Mikrorechner MR. Dieser erzeugt unter Verwendung der Zählstufe Z als Nummerschaltimpulse dienende Wählimpulse W und gibt sie an den Steuerteil ST ab. Gleichzeitig werden die Wählzeichen in den Speicher SP1 eingespeichert. Der Speicher SP1 ist vorzugsweise als Halbleiterspeicher ausgebildet. Derartige Halbleiterspeicher sind üblicherweise flüchtig, d. h. die in ihnen gespeicherte Information geht nach dem Abschalten der Betriebsspannung verloren. An dem Speicher SP1 ist daher eine Batterie BA angeschlossen, die die Spannungsversorgung übernimmt, falls die Betriebsspannung der Fernschreibmaschine nicht mehr vorhanden ist. Die Betriebsspannung der Fernschreibmaschine wird durch eine Umschalteinheit U überwacht, die gegebenenfalls die von der Batterie BA abgegebene Versorgungsspannung dem Speicher SP1 zuführt.

Während der Eingabe der Wählzeichen können diese am Drucker DR abgedruckt werden. Zu diesem Zweck können die Wählzeichen vom Ausgang der Sende-Empfangseinheit SEE mittels eines Signals S8 als Sendedaten SD1 zum Steuerteil ST abgegeben werden und dort als Empfangsdaten ED zurückgeführt werden und über ein ODER-Glied D2 als Empfangsdaten ED1 der Grundelektronik GE zugeführt werden. Es ist auch möglich, die Wählzeichen über ein UND-Glied U2 mittels eines Signals S9 über das ODER-Glied D2 zurückzuschleifen.

Falls nach der erfolgten Wahl eine Verbindung nicht zustandekommt, weil der gerufene Teilnehmer besetzt ist, wird der Wahlvorgang durch Betätigen der Anruftaste A erneut eingeleitet. Nach dem Betätigen einer entsprechenden Wiederholtaste werden dieser Wiederholtaste zugeordnete Sendedaten SD über den Bus B dem Mikrorechner MR zugeführt. Dieser liest nun die im Speicher SP1 gespeicherten Wählzeichen aus und erzeugt Verwendung der Zählstufe Z die Wählimpulse W. Die Wählzeichen werden auch in diesem Fall am Drucker DR abgedruckt.

Falls der Wählvorgang bereits nach dem Eingeben weniger Wählzeichen durch die Vermittlungsstelle unterbrochen wird, wird das Signal S2 weggenommen. Außerdem wird das Signal NA Nicht erzeugt. Der Mikrorechner MR erzeugt in diesem Fall ein Signal S10, das über das ODER-Glied D1 als Signal S3 der Grundelektronik GE zugeführt wird und das die Fernschreibmaschine weiterhin im betriebsbereiten Zustand hält. Gleichzeitig gibt der Mikrorechner MR ein Signal S11 über das UND-Glied U1 ab, das der Vermittlungsstelle die Nichtbetriebsbereitschaft der Fernschreibmaschine vortäuscht. Die Bedienperson kann mit der Eingabe der Wählzeichen fortsetzen und die Wählzeichen werden in entsprechender Weise wie bei dem Wählvorgang im Speicher SP1 gespeichert. Nach der Eingabe aller Wählzeichen kann über die Anruftaste A ein neuer Wählvorgang eingeleitet werden, bei dem nach dem Betätigen der Wiederholtaste wie im Fall des besetzten Teilnehmers die Wählzeichen wieder aus dem Speicher SP1 ausgelesen werden.

Falls die Bedienperson nach der Unterbrechung des Wählvorgangs durch die Vermittlungsstelle keine weiteren Wählzeichen eingibt, erzeugt der Mikrorechner MR unter Verwendung der Zählstufe Z ein Signal S12, das über ein ODER-Glied D3 als Signal S13 der Grundelektronik GE zugeführt wird. Dieses Signal S2 löst am Lautsprecher LR ein akustisches Signal aus, das zur Fortsetzung des Wählvorgangs auffordert. So lange nicht alle Wählzeichen im Speicher SP1 gespeichert sind, werden alle anschließend eingegebenen Wählzeichen am Drucker DR abgedruckt und in den Speicher SP1 geschrieben. Mit der akustischen Aufforderung zur Fortsetzung des Wählvorgangs läuft in der Zählstufe Z eine Zeitschleife ab, die mit jedem neu eingetasteten Wählzeichen zurückgesetzt und erneut gestartet wird. Diese Zeitschleife hat beispielsweise eine Dauer von 3 sec. Wenn mindestens ein Zeichen eingetastet wurde, ertönt nach 3 sec. ein weiteres akustisches Signal. Wenn nach diesem Signal kein weiteres Wählzeichen eingegeben wird, oder wenn die entsprechende Speicherzeile im Speicher SP1 gefüllt ist, wird die Fernschreibmaschine selbsttätig über das Signal S10 ausgeschaltet.

Als Wiederholtaste kann eine Sondertaste am Bedienteil BT oder an der Tastatur TA vorgesehen sein. Eine zusätzliche Taste ist jedoch nicht erforderlich, wenn als Wiederholtaste eine Taste verwendet wird, die keinem Wählzeichen zugeordnet ist. Beispielsweise wird als Wiederholtaste die Taste verwendet, die dem Zeichen « + » zugeordnet ist. Dieses Zeichen ist kein Wählzeichen und somit wird nach dem Betätigen dieser Taste sofort erkannt, daß es sich um eine Rufwiederholung handelt.

## Ansprüche

1. Verfahren zum Erzeugen von Wählsignalen in einer Fernschreibmaschine, bei dem nach dem Betätigen einer Anruftaste (A) an der Fernschreibmaschine eine Vermittlungsstelle zum Eingeben von Wählzeichen auffordert, die einem fernen Teilnehmer zugeordnet sind und bei dem während des Wählvorgangs in Abhängigkeit von dem Wählzeichen Wählsignale erzeugt werden, gekennzeichnet durch folgende Verfahrensschritte :

a) Während des Wählvorgangs werden die den eingegebenen Wählzeichen zugeordneten Wählsignale zur Vermittlungsstelle übertragen und gleichzeitig in der Fernschreibmaschine in einem Speicher (SP1) gespeichert,

b) falls der Wählvorgang durch die Vermittlungsstelle nach dem Eingeben eines oder mehrerer Wählzeichen unterbrochen wird, wird die Betriebsbereitschaft der Fernschreibmaschine aufrechterhalten und der Vermittlungsstelle wird die Nichtbetriebsbereitschaft der Fernschreibmaschine vorgetäuscht,

c) alle weiteren eingegebenen Wählzeichen werden im Speicher (SP1) gespeichert,

d) nach einem erneuten Betätigen der Anruftaste (A) und nach dem Betätigen der Wiederholtaste werden die gespeicherten Wählzeichen ausgelesen und es werden die den Wählzeichen zugeordneten Wählsignale (W) erzeugt.

2. Verfahren nach Anspruch 1, dadurch gekennzeichnet, daß die Fernschreibmaschine abgeschaltet wird, wenn nach einer Unterbrechung des Wahlvorgangs nach jeweils einer vorgegebenen Zeitdauer kein Wählzeichen eingegeben wird.

3. Verfahren nach Anspruch 2, dadurch gekennzeichnet, daß vor Ablauf der vorgegebenen Zeitdauer ein akustisches Signal erzeugt wird.

4. Anordnung zur Durchführung des Verfahrens nach Anspruch 1, dadurch gekennzeichnet, daß eine Wählstufe (WS) vorgesehen ist, die einen Speicher (SP1) enthält, in den nach dem Betätigen der Anruftaste (A) gleichzeitig mit dem Wählvorgang alle eingegebenen Wählzeichen eingespeichert werden und daß die Wählstufe (WS) einen Mikrorechner (MR) enthält, der bei einer Unterbrechung des Wählvorgangs durch die Vermittlungsstelle ein Signal (S5) erzeugt, das dieser die Nichtbereitschaft der Fernschreibmaschine anzeigt, der zur Aufrechterhaltung der Betriebsbereitschaft der Fernschreibmaschine ein Signal (S10) an die Grundelektronik (GE) der Fernschreibmaschine abgibt und der alle weiterhin eingegebenen Wählzeichen in den Speicher (SP1) einspeichert.

5. Anordnung nach Anspruch 4, dadurch gekennzeichnet, daß die Wählstufe (WS) eine Schaltstufe (SS) enthält, über di Signale der Vermittlungsstelle und der Grundelektronik (GE) der Fernschreibmaschine zugeführt werden und die mit einer Sende-Empfangseinrichtung (SEE) versehen ist, über die die Wählzeichen dem Mikrorechner (MR) zugeführt werden.

6. Anordnung nach Anspruch 4 oder Anspruch 5, dadurch gekennzeichnet, daß der Speicher (SP1) als Halbleiterspeicher ausgebildet ist und mit einer Umschaltstufe (U) verbunden ist, die bei einer Unterbrechung der Stromversorgung der Fernschreibmaschine eine Batterie (BA) als Betriebsspannungsquelle zuschaltet.

7. Anordnung nach Anspruch 6, dadurch gekennzeichnet, daß der Speicher (SP1) Bestandteil des Mikrorechners (MR) ist.

## Claims

1. Method for the production of selection signals in a teleprinter, wherein after the actuation of a call key (A) on the teleprinter, a switching centre asks for the input of selection characters which are assigned to a remote subscriber, and wherein selection signals are produced during the selection process in dependence upon the selection character, characterised by the following method steps :

a) during the selection process, the selection signals assigned to the input selection characters are transmitted to the switching centre and simultaneously stored in a store (SP1) in the teleprinter,

b) if the selection process is interrupted by the switching centre following the input of one or more selection characters, the operational readiness of the teleprinter is maintained and the operational non-readiness of the teleprinter is simulated to the switching centre,

c) all further input selection characters are stored in the sotre (SP1),

d) following a re-actuation of the call key (A) and following the actuation of the repeat key the stored selection characters are read out and the selection signals (W) assigned to the selection characters are produced.

2. Method as claimed in claim 1, characterised in that the teleprinter is switched off if following an interruption of the selection process non selection character is input after a predetermined period of time.

3. Method as claimed in claim 2, characterised in that an acoustic signal is produced prior to the expiration of the predetermined period of time.

4. Arrangement for the implementation of the method as claimed in claim 1, characterised in that there is provided a selection stage (WS) which comprises a store (SP1), wherein following the actuation of the call key (A) all input selection characters are stored simultaneously with the selection process, and that the selection stage (WS) comprises a microcomputer (MR) which in the event of an interruption of the selection process by the switching centre produces a signal (S5) which indicates the non-readiness of the teleprinter to the switching centre, and which microcomputer transmits a signal (S10) to the basic electronics (GE) of the teleprinter and stores all further input selection characters in the store (SP1).

5. Arrangement as claimed in claim 4, characterised in that the selection stage (WS) comprises a switching stage (SS), by means of which signals of the switching centre and of the basic electronics (GE) are fed to the teleprinter and which is provided with a transmitting-receiving device (SEE), by means of which the selection characters are fed to the microcomputer (MR).

6. Arrangement as claimed in claim 4 or claim 5, characterised in that the store (SP1) is designed as a semiconductor sotre and connected to a change-over stage (U) which in the event of an interruption of the current supply of the teleprinter connects a battery (BA) as an operating voltage source.

7. Arrangement as claimed in claim 6, characterised in that the store (SP1) is a component part of the microcomputer (MR).

**Revendications**

1. Procédé pour produire des signaux de sélection dans un téléscripteur, selon lequel après l'actionnement d'une touche d'appel dans le téléscripteur, un central demande l'introduction de caractères de sélection qui sont associés à un abonné lointain, et selon lequel pendant le processus de sélection, des signaux de sélection sont produits en fonction du caractère de sélection, caractérisé par les phases opératoires suivantes :

a) pendant le processus de sélection, les signaux de sélection associés aux caractères de sélection introduits sont transmis au central et sont mémorisés simultanément dans une mémoire (SP1) dans le téléscripteur,

b) dans le cas où le processus de sélection est interrompu par le central après l'introduction d'un ou de plusieurs caractères de sélection, l'état de disponibilité pour le fonctionnement du téléscripteur est maintenu et l'état d'indisponibilité pour le fonctionnement du téléscripteur est simulé vis-à-vis du central,

c) tous les autres caractères de sélection introduits sont mémorisés dans la mémoire (SP1),

d) après un nouvel actionnement de la touche (A) et après l'actionnement de la touche de répétition, les caractères de sélection mémorisés sont lus et les signaux de sélection (W) associés aux caractères de sélection sont produits.

2. Procédé suivant la revendication 1, caractérisé par le fait que le téléscripteur est débranché lorsqu'après une interruption du processus de sélection aucun caractère de sélection n'est introduit après un intervalle de temps prédéterminé.

3. Procédé suivant la revendication 2, caractérisé par le fait qu'un signal sonore est produit avant le déroulement de l'intervalle de temps prédéterminé.

4. Dispositif pour la mise en œuvre du procédé suivant la revendication 1, caractérisé par le fait qu'il est prévu un étage de sélection (WS) qui contient une mémoire (SP1), dans laquelle, après l'actionnement de la touche d'appel (A), tous les caractéres de sélection introduits sont mémorisés en même temps que s'effectue le processus de sélection, et que l'étage de sélection (WS) contient un microcalculateur (MT) qui, dans le cas d'une interruption du procédé de sélection par le central, délivre un signal (S5) qui indique au central l'état d'indisponibilité du téléscripteur et qui délivre un signal (S10) au système électronique de base (GE) du téléscripteur pour maintenir l'état de disponibilité à fonctionner du téléscripteur, et qui mémorise tous les caractères de sélection introduits en supplément, dans la mémoire (SP1).

5. Dispositif suivant la revendication 4, caractérisé par le fait que l'étage de sélection (WS) contient un étage de commutation (SS) au moyen duquel des signaux sont envoyés au central et au système électronique de base (GE) du téléscripteur et qui est pourvu d'un dispositif émetteur-récepteur (SEE) au moyen duquel les caractères de sélection sont envoyés au microcalculateur (MR).

6. Dispositif suivant la revendication 4 ou 5, caractérisé par le fait que la mémoire (SP1) est réalisée sous la forme d'une mémoire à semiconducteurs et est reliée à un étage de commutation (U) qui, lors d'une interruption de l'alimentation en courant du téléscripteur, branche une batterie (BA) en tant que source de tension de fonctionnement.

7. Dispositif suivant la revendication 6, caractérisé par le fait que la mémoire (SP1) fait partie intégrante du microcalculateur (MR).

# FIG 1

# FIG 2

# FIG 3